Europäisches Patentamt

European Patent Office

Office européen des brevets

(11) Veröffentlichungsnummer: **0 407 760 A2**

# (12) EUROPÄISCHE PATENTANMELDUNG

(21) Anmeldenummer: 90111376.1

(22) Anmeldetag: **16.06.90**

(51) Int. Cl.5: **F16F 13/00**

(30) Priorität: **13.07.89 DE 3923146**

(43) Veröffentlichungstag der Anmeldung:
**16.01.91 Patentblatt 91/03**

(84) Benannte Vertragsstaaten:
**DE FR GB IT**

(71) Anmelder: **Continental Aktiengesellschaft**
**Königsworther Platz 1**
**D-3000 Hannover 1(DE)**

(72) Erfinder: **Bebermeier, Jürgen**
**Granatstrasse 20**
**D-3008 Garbsen 1(DE)**

(54) **Schwingungsdämpfendes Lagerelement.**

(57) Bei einem Lagerelement (10) mit einem Gummi-federelement (14) und mit einer Hydraulikkammer, die durch eine mit einem Drosselkanal (19) versehe-ne Trennwand (18) in eine obere Hydraulikkammer (21) und eine untere Hydraulikkammer (13) unterteilt ist, ist der Trennwand (18) eine Schaumstoffauflage (20) zugeordnet. Bei einem anderen Einsatzgebiet, nämlich einer hydraulisch gedämpften Buchse, mit einer, zwischen einer Außenhülse und einer Innen-hülse angeordneten, die Hydraulikkammer untertei-lenden speichenförmigen Gummifeder, sind die ra-dial äußeren Innenwandungen der Hydraulikkam-mern im Bereich der Außenhülse mit einer Schaum-stoffauflage versehen.

FIG.1

## SCHWINGUNGSDÄMPFENDES LAGERELEMENT

Die Erfindung betrifft ein schwingungsdämpfendes Lagerelement, mit einer Hydraulikkammer und einem Gummifederelement und mit einer die Hydraulikkammer in eine obere und eine untere Kammer unterteilende, mit einem Überströmkanal versehene Trennwand.

Derartige Lagerelemente, beispielsweise Zweikammer-Hydrolager sind z.B. aus der DE-C2 34 07 553 bekannt und vielfach im Einsatz. Sie sind allgemein mit einer elastisch eingespannten Membran oder einer Membran mit Freiweg vesehen, die bei höheren Frequenzen und kleinen Amplituden eine Endkoppelung bewirken. Derartige Membranen bedeuten jedoch einen relativ hohen Produktionsaufwand und unterliegen recht engen Toleranzgrenzen.

Aufgabe der vorliegenden Erfindung ist es, Lager der eingangs beschriebenen Art mit einer Entkoppelungseinrichtung zu schaffen, die einfach und kostengünstig herzustellen ist und mit der übliche Toleranzprobleme vermieden werden.

Gelöst wird diese Aufgabe dadurch, daß die dem Gummifederelement zugewandte obere Kammer an zumindest einem Teil der sie begrenzenden Wandungsfläche eine Auflage aus geschlossenzelligem Schaumstoff aufweist. Durch diese Maßnahme wird ein Lagerelement geschaffen, bei dem anstelle der schwierig zu handhabenden Membran ein Schaumstoff eingebracht ist, der bei kleinen Verformungen eine sehr geringe Federsteifigkeit aufweist, bei größeren Verformungen jedoch, bedingt durch die zunehmende Komprimierung der in ihm eingeschlossenen Luftblasen, stark progressiv immer steifer wird.

Der Schaumstoff ist dabei so bemessen, daß seine Federsteiffigkeit im Bereich um die Nullage deutlich unter der Beulsteifigkeit der Trennwand liegt. Durch die Dicke der Schaumstoffauflage kann die Federkennlinie und damit auch die Entkoppelung variiert werden, und zwar werden bei dünnen Schaumstoffauflagen sehr kleine Amplituden und bei dikkeren Schaumstoffauflagen auch größere Amplituden entkoppelt. Die Entkoppelung erfolgt also bei höheren Frequenzen und kleinen Amplituden, bei denen die Drosselwirkung im Überström-̄ kanal so stark ist, daß keine Flüssigkeit durch diesen strömt, durch das Zusammendrücken des Schaumstoffes. Da der Schaumstoff für kleine Amplituden um die Nullage nur eine geringe Steifigkeit aufweist, ändert sich hierbei die Steifigkeit des gesamten Lagerelementes und damit das Isolationsverhalten kaum.

Bei einem anderen Einsatzgebiet, nämlich bei bei hydrau lisch gedämpften Buchsen mit einer zwischen einer Außenhülse und einer Innenhülse angeordneten, die Hydraulikkammer unterteilenden speichenförmigen Gummifeder, ist es vorgesehen, daß die im Bereich der Außenhülse radial äußeren Innenwandungen der Hydraulikkammern mit einer Schaumstoffauflage versehen sind. Durch diese Maßnahme ist auch bei hydraulisch gedämpften Buchsen, bei denen üblicherweise für eine Entkoppelungsmembran kein ausreichender Bauraum vorhanden ist, eine Entkoppelung durchführbar.

Weitere vorteilhafte Maßnahmen sind sind den Unteransprüchen beschrieben. Die Erfindung ist in der beiliegenden Zeichnung dargestellt und wird nachfolgend näher beschrieben; es zeigt:

Fig. 1 den Schnitt durch ein schematisch dargestelltes Zweikammer-Hydrauliklager;

Fig. 2 den Axialschnitt durch eine hydraulich gedämpfte Buchse;

Fig. 3 eine Federkennlinie der Schaumstoffauflage eines erfindungsgemäßen Lagers.

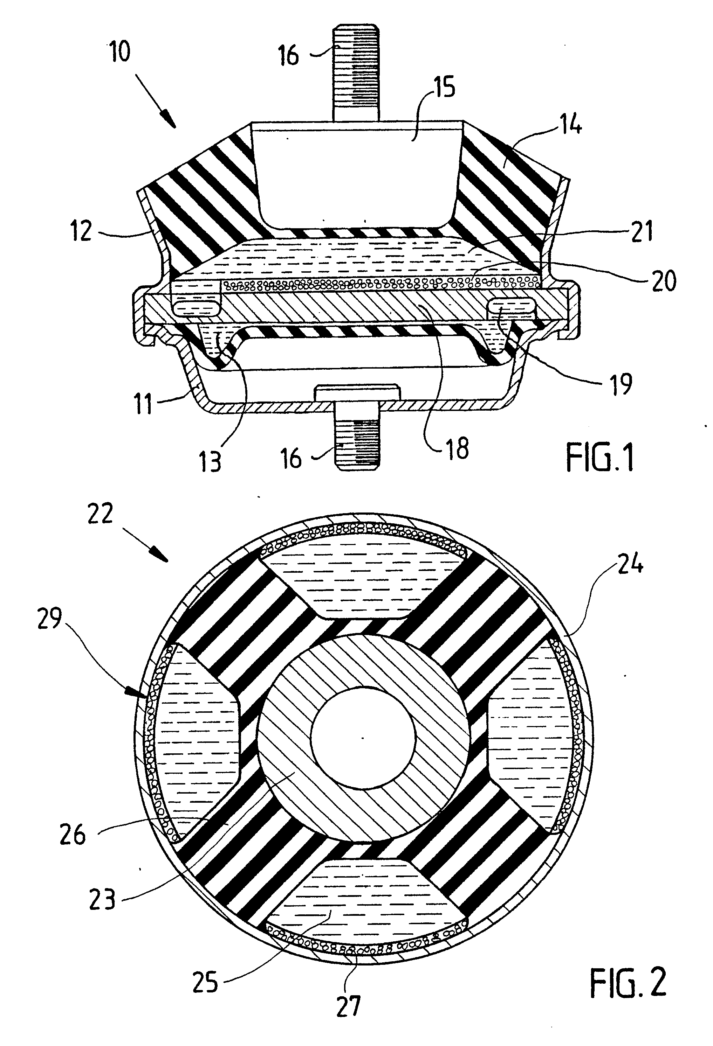

Das in der Fig. 1 dargestellte Hydrauliklager 10 weist eine untere Gehäusehälfte 11 und eine obere Gehäusehälfte 12 auf, wobei die obere Gehäusehälfte 12 mit einem Gummife derelement 14 verbunden ist. In das Gummifederelement 14 ist zentrisch ein Anschlußteil 15 einvulkanisiert, das mit einem Lageranschluß 16 versehen ist. In der unteren Gehäusehälfte 11 ist eine Membran 17 vorgesehen, die eine untere Hydraulikkammer 13 abteilt. Die untere Hydraulikkammer 13 ist durch eine Trennwand 18 von einer in der oberen Gehäusehälfte 12 gelegenen und von dem Gummifederelement 14 umschlossenen oberen Hydraulikkammer 21 getrennt. Zwischen der unteren Hydraulikkammer 13 und der oberen Hydraulikkammer 21 besteht eine strömungsdrosselnde Verbindung in Form eines Überströmkanals 19. In der oberen Hydraulikkammer 13 ist auf der Trennwand 18 eine erfindungsgemäße geschlossenzellige Schaumstoffauflage 20 angeordnet.

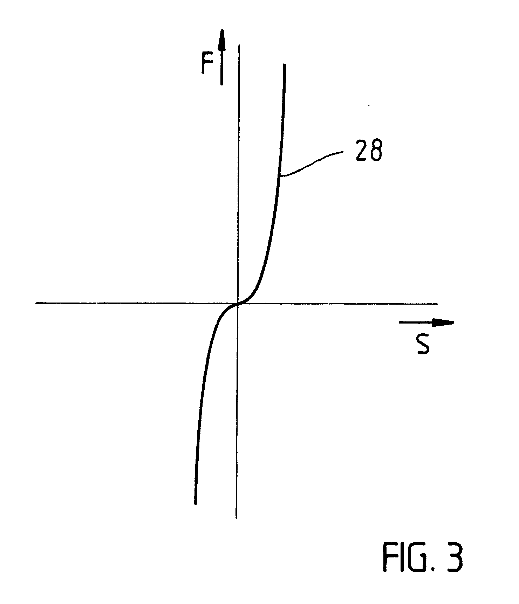

In der Fig. 2 ist eine hydraulisch gedämpfte Buchse 22 schematisch dargestellt. Diese weist eine Außenhülse 24 und eine Innenhülse 23 auf, wobei zwischen der Innenhülse 23 und der Außenhülse 24 speichenartig angeordnete Gummifedern 26 verlaufen. Die Gummifedern unterteilen den Zwischenraum in Hydraulikkammern 25, die durch nicht eingezeichnete Überströmkanäle miteinander verbunden sind. In den Hydraulikkammern 25 sind radial außen auf die Innenwandung 29 der Außenhülse 24 erfindungsgemäße geschlossenzellige Schaumstoffauflagen 27 aufgebracht. In dem in der Fig. 3 dargestellten Diagramm ist auf der Ordinate die die Schaumstoffauflage komprimierende Kraft F und auf der Abszisse der zugehörige Weg S aufgetragen. Die Feder-Kennlinie 28 verläuft dabei progressiv.

Bezugszeichen

10 Hydrauliklager
11 untere Gehäusehälfte
12 obere Gehäusehälfte
13 untere Hydraulikkammer
14 Gummifederelement
15 Anschlußteil
16 Lageranschluß
17 Membran
18 Trennwand
19 Drosselkanal
20 Schaumstofflage
21 obere Hydraulikkammer
22 gedämpfte Buchse
23 Innenhülse
24 Außenhülse
25 Kammer
26 speichenartige Gummifeder
27 Schaumstoffaulage
28 Kennlinie
29 Innenwandung

**Ansprüche**

1. Schwingungsdämpfendes Lagerelement, mit einer Hydraulikkammer und einem Gummifederelement und mit einer die Hydraulikkammer in eine obere und eine untere Kammer unterteilenden, mit einem Überströmkanal versehenen Trennwand, dadurch gekennzeichnet, daß die dem Gummifederelement (14) zugewandte obere Kammer (21) an zumindest einem Teil der sie begrenzenden Wandungsfläche eine Auflage (20) aus geschlossenzelligem Schaumstoff aufweist.

2. Lagerelement nach Anspruch 1, dadurch gekennzeichnet, daß die der oberen Kammer (21) zugewandte Oberfläche der Trennwand (18) eine Auflage (20) aus geschlossenzelligem Schaumstoff aufweist.

3. Schwingungsdämpfendes Lagerelement mit einer Außenhülse und einer Innenhülse und mit speichenartig zwischen den beiden Hülsen angeordneten und diese gegeneinander abstützenden Gummifedern, die den Ringraum zwischen den Hülsen in durch Überströmkanäle miteinander verbundene Hydraulikkammer unterteilen, dadurch gekennzeichnet, daß zumindest Teile der die Hydraulikkammern (25) begrenzenden Wandungsflächen eine Auflage (27) aus geschlossenzelligem Schaumstoff aufweisen.

4. Lagerelement nach Anspruch 3, dadurch gekennzeichnet, daß die die Kammern (25) nach außen begrenzenden Innenwandungsteile (29) der Außenhülse (24) eine Auflage (27) aus geschlossenzeilligem Schaumstoff aufweisen.

EP 0 407 760 A2

FIG.1

FIG.2

4

FIG. 3